Europäisches Patentamt

European Patent Office

Office européen des brevets

(19)

(11) Publication number: **0 271 205**
**A2**

## (12) EUROPEAN PATENT APPLICATION

(21) Application number: **87309801.6**

(22) Date of filing: **05.11.87**

(51) Int. Cl.⁴ **B66D 1/36** , B66D 3/20

(30) Priority: **18.11.86 GB 8627478**
**05.02.87 GB 8702552**

(43) Date of publication of application:
**15.06.88 Bulletin 88/24**

(84) Designated Contracting States:
**AT BE CH DE ES FR GB GR IT LI LU NL SE**

(71) Applicant: **BELLWAY (SERVICES) LIMITED**
**Horsley House Regent Centre**
**Gosforth Newcastle upon Tyne NE3 3LU(GB)**

(72) Inventor: **Hofmann, Dietrich Adolf**
**Half Moon House**
**Kirkwhelpington Northumberland(GB)**
Inventor: **O'Connell, Geoffrey William**
**The Croft**
**Belford Northumberland(GB)**
Inventor: **Norman, Michael Eric**
**The Glebe Farmhouse, Ovingham**
**Prudhoe Northumberland(GB)**

(74) Representative: **Evans, David Charles et ai**
**F.J. CLEVELAND & COMPANY 40-43,**
**Chancery Lane**
**London, WC2A 1JQ(GB)**

(54) **Winches.**

(57) The present invention relates to a winch for a vehicle comprising a longitudinal winch cable, a drum rotatable about its axis for winding said cable and motor means for driving said drum in at least one sense, characterised in that the guide means is provided in spaced relationship to said drum for guiding said cable thereto, the drum being provided on its winding surface with a helical guide means for locating the cable thereon during winding, the geometry of the guide member, drum dimensions and relative spacing being such that during winding of the second and subsequent layers of cable upon the drum significant bunching of individual wraps thereon does not occur.

EP 0 271 205 A2

## " WINCHES "

This invention relates to winches and has particular reference to winches for mounting on vehicles.

Winches for mounting on vehicles are well known and have been used for a large number of purposes including drawing articles, loads and trailers to the vehicle on which the winch is mounted. Such winches have also been used for the recovery of a vehicle on which the winch is mounted from situations where the vehicle would otherwise be stranded.

Cross-country vehicles such as Landrovers and the like, frequently carry winches in which the winch drum is driven either by a direct drive or power take-off from the engine or alternatively by separate electric motor fed by the vehicles' electrical system.

One of the major difficulties encountered with such vehicles is that they are frequently used for towing a trailer. For this purpose a tow hitch is secured the back of the vehicle and in coupling the trailer to the vehicle, it is necessary to back the prime mover, i.e. the Landrover, to a position such that the tow hitch is juxtaposed the coupling on the vehicle to be towed in order that the coupling may be effected. This is an operation requiring considerable skill. It would clearly be much easier for the hitch member to be demountable from the towing vehicle or from the trailer, said which the hitch member being attached to the bitter end of the winding cable of the winch, then effect coupling of the hitch member with the other vehicle. Operation of the winch to wind the cable and draw the hitch into its operative position will hence effect coupling of the vehicles.

Devices of this type are generally well known. On most vehicles the winch assembly is located at the rear with the tow hitch. However the problem that arises is to provide satisfactory winding of the cable on the winch drum. It will be appreciated by the man skilled in the art that the essence of such a device is the provision of a compact unit incorporating the winch drum, the winch motor, the drive gear from the motor to the drum and the nesting hitch assembly without undue projection either rearwardly of the vehicle or downwardly, which latter would inhibit the cross country capability of such a vehicle. The winch cable is usually wire and that this imposes limitations on the size of the drum that can be employed for winding and also provides problems for the quantity of cable that can be accommodated within a given size of housing. In winding such cables it is frequently the case that wraps of cable "bunch" towards one end of the drum to such an extent that the cable jams against the housing accommodating the drum causing the winch to stall before the hitch has nested within its housing, thus preventing further winding of the winch.

Winches have been constructed with spooling mechanisms to overcome this problem, but these spooling mechanisms tend to be costly to incorporate and furthermore, occupy space within the housing necessitating a larger assembly than would otherwise be the case.

The present Applicants have perceived that there is a need for a compact winch unit in which a hitch or coupling assembly at the bitter end of the winding cable is substantially self-locating within its housing and at the same time winding of the cable on the drum can be effected without substantial bunching of the cable thereon.

According to the present invention, therefore, there is provided a winch for a vehicle comprising a longitudinal winch cable, a drum rotatable about its axis for winding said cable and motor means for driving said drum at least one sense, characterised in that guide means is provided in spaced relation to said drum for guiding said cable thereto and in that the drum is provided on its winding surface with helical guide means for locating said cable thereon during winding, the geometry of the guide member, drum dimensions and said relative spacing being such that during winding of the second and subsequent layers of cable on the drum, significant bunching of individual wraps thereon does not occur.

In a further aspect of the present invention there is provided a winch comprising a winding cable, a winch drum for receiving said cable, guide means for diverting said cable through a substantial angle to said winding a drum, the arrangement being such that in a substantially no load situation the angle of deflection from the guide means to the extremities of the winding surfaces of the drum is such that the frictional forces acting between adjacent wraps of cable retain the lay of the cable without substantial bunching.

The drum may have on its winding surface helical guide means for locating the lay of the first layer of cable thereon. The helical guide means may be in the form of a helical groove in the winding surface of the drum.

The guide means may be a pulley rotatable about an axis serving to divert the winding direction of the cable transverse to the incidence of that cable to the pulley during winding.

The axis of the guide means may be skew with respect to the plane containing the cable feed to the guide means so that cable is wrapped about said member to cover at least three quarters of its circumferential extent. The guide member may include means for providing minimum tension in the cable between the guide means and said drum in an otherwise no-load situation. The guide member may further be mounted in a cage or support for rocking movement in response to the position of the lay of the cable on the winding surface of the drum.

In a particular embodiment of the present invention the components of the winch are housed within a housing in which the axis about which the drum rotates is substantially parallel to the primary winding direction of the cable incident upon the guide means. The guide means may serve to divert the winding direction of the cable from a direction incident upon the guide means through an angle between 75° and 310° for supply to said drum.

The bitter end of the winding cable may include a coupling member, typically a hitch comprising the ball portion of a ball and socket towing hitch. The coupling member may include a nesting portion which locates and nests in a mating portion of the housing when the cable is in the fully retracted position. Means may be provided for securing the coupling member in its mating position in its normal, stowed or towing mode.

The motor means for the drum may be an electric motor and may be capable of driving the drum to provide motion of the drum to effect both winding and unwinding of the cable. The drive means between the electric motor and the drum may be one or more of a chain drive, a gear train, an epicylic gear train or a worm and pinion drive. The drive means between the motor means and the winch drum may also include an over-run mechanism for preventing substantial over-run of the drum during unwinding of the cable.

The housing accommodating the components of the winch in accordance with the present invention is preferably adapted for securing to a vehicle with the coupling member located substantially on the foreaft centre line thereof.

It will be further appreciated that by increasing the diameter of the drum to the maximum permissible by the space available within the housing, the number of wraps of cable required about the winding surface of the drum will be reduced for any given length of cable.

By diverting the winding direction of the cable through an angle effectively of 90° from the angle of incidence of the cable to the guide means, the principal dimension of the hitch assembly becomes directed laterally to the fore-aft line of the vehicle. This in turn allows a greater distance between the effective point of take-off of the cable to the extremities of the winding surface of the drum which will thus allow wrapping of the cable on the drum to be effected with less tendency to bunching of the wraps than hitherto. By careful selection of the geometry between the point of take-off from the guide means and the width of the winding surface of the drum and/or with means for applying tension to the cable during winding in a substantially no load situation between the pulley and the drum, substantial bunching is avoided.

Following is a description by way of example only and with reference to the accompanying drawings of methods of carrying the invention into effect.

In the drawings:-

Figure 1 is a plane view of a winch in accordance with the present invention.

Figure 2 is a side view in part section on the line 1-1' of Figure 1.

Figure 3 is a section along the lines 3-3' of Figure 1

Figure 4 is a plane view of an alternative embodiment of the present invention and Figure 5 is a section along the lines 5-5' of Figure 4.

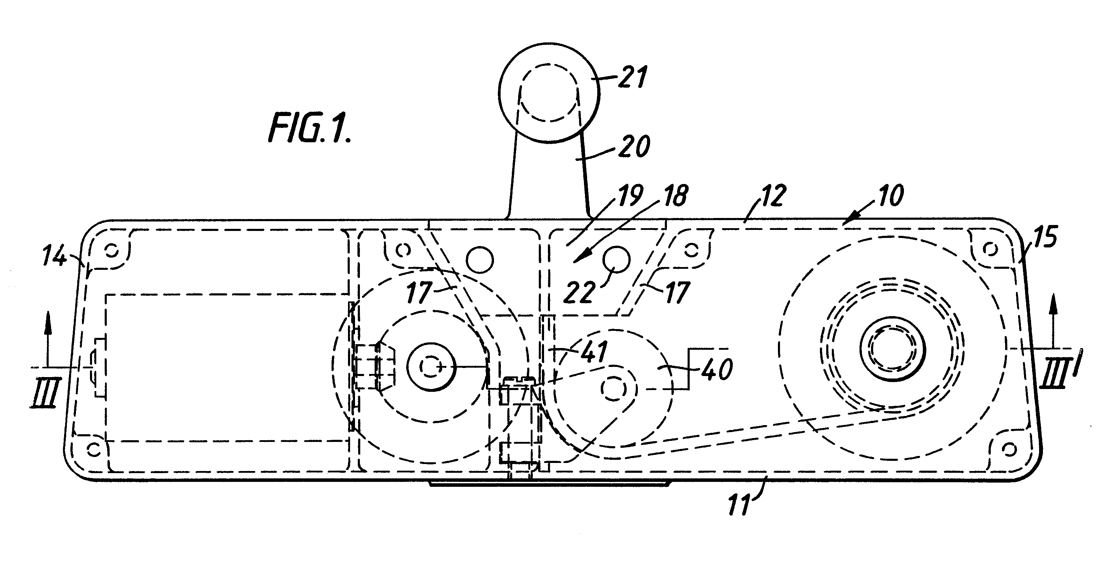

Turning now to Figure 1 of the drawings, the winch comprises a substantially rectilinear housing 10 having a forward wall 11, a rear wall 12, a first end wall 13, a second end wall 14, an upper wall 15 and a lower wall 16. The rear wall 12 is provided substantially centrally thereof with a pair of inwardly directed converging flanges 17 which together define a nesting recess 18, adapted to accommodate a nesting body portion 19 carrying a hitch member 20 having a 50 mm International Standard towing ball 21 for coupling to a trailer. The body 19 is provided with a pair of substantially vertical drilling 22 adapted to cooperate with corresponding drillings in housing 10 for the purpose of receiving securing bolts or members for locking body portion 19 to housing 10.

The housing 10 is provided with a substantially vertically extending centrally disposed partion wall 23 terminating towards its lower end in a horizontal partioned wall 24 which together with the corresponding portions of wall 13 and 15 define a winding chamber 25. The winding chamber 25 carries towards a first end wall 13 a substantially vertically disposed axle 26 journalled for rotation in bearing 27 in upper wall 15, bearing 28 in horizontal wall 24 and bearing 29 in lower wall 16. The axial 26 carries in that portion of the axle extending within chamber 25 a drum 30, the lateral extremities of which are defined by a pair of flanges 31, 31' and having a winding surface 32 with a helical groove 33 in the surface thereof.

The partition wall 23 is provided at an intermediate cranked portion 34 with a substantial web portion 35 which together with a forward wall 11 has drillings to accommodate a pivot pin 36 of substantial construction. Pivot pin 36 carries for pivotal movement thereon a bifurcated cage member 37 having a pair of arms 38, 38′ extending from pivot pin 36 in the direction of winding drum 30. Towards the extremity of the arms 38, 38′ there is provided an axle 39 carrying a pulley 40 for free rotation with respect to bifurcated member 37. A winding cable 41 extends from body portion 19 of hitch member 20 to which it is fixedly secured, about pulley 40 and thence to winding drum 30.

The portion of the axle 26 between bearing 28 and 29 carries a large pinion gear 42 which is driven by means of a gear train indicated generally at 43 from a lay shaft 44 extending substantially vertically between upper surface 15 and lower surface 16 of housing 10. The lay shaft 44 is journalled at its lower end in a bearing 45 and its upper end in a bearing 46 juxtaposed which is an overrun device 47. The lay shaft 44 carries a bevel pinion 48 adapted to engage with a driven pinion 49 and an output drive pinion 50. The portion of the housing towards second end 14 carries an electric motor 51 which in this embodiment is a type commercially available under the Trade Mark "KLAXON" under type No. M05-DEV-0060. This motor 51 has an output shaft 52 carrying driven pinion 49.

The overrun device indicated generally at 47, comprises a sprag clutch 60 acting between a clutch plate 61 and housing wall 15 to permit rotation of clutch plate 61 in winding direction of shaft 44 but to lock plate 61 aganst rotation in the opposite sense. Shaft 44 has towards its rear end a multi-splined thread, the pitch of which is coarse when considered with the shaft axis. This thread carries a correspondingly thread collar 62 capable of screw movement on said threads axially of said shaft. Collar 62 carries for movement therewith a second clutch plate 63 having on its surface an annulus of friction material 64. Second plate 63 is biased into engagement with first plate 61 by means of spring 65.

The winch assembly described above is installed at the rear of a towing vehicle and the motor 51 is connected via suitable switch means to the electrical system of the vehicle; said switch being capable of operating motor 51 to drive the drum via the gear train 43 in both a winding and unwinding sense. In operation, the locking members are removed from drillings 22 to allow separation of the hitch body portion 19 from the nesting recess 18 in housing 10. The switching means (not shown) to motor 51 is then operated to effect unwinding of drum 30 thus permitting cable to be run off the drum via pulley 40 and to allow the hitch 20 to be removed from its nesting recess 18 so that as continued amounts of cable are unwound until the hitch 20 is in juxtaposition to the cooperating cup of tow bar of the vehicle to be towed. If the rate of unwinding by the drum 30 is such that the tension in the cable 41 is relaxed the override mechanism 47 will act to disengage the motor drive thereby permitting free running of the motor and preventing cable being unwound from the drum to tangle or crimp within the winding chamber 25.

In normal winding of the winch drum spring 65 maintains plates 63 and 61 in torque transmitting relationship so that plate 61 rotates with shaft 44 and sprag clutch 60 "freewheels".

When the motor direction is reversed to unwind the winch cable, the sprag clutch 60 prevents rotation of plate 61. Torque applied by motor 51 to shaft 44 results in collar 62 being wound axially of shaft 44 by interaction of the multi-splined thread to lift against spring 65, plate 63 and friction lining 64 from plate 61 thus allowing slippage to occur nd power unwinding to occur. If the winch cable "overruns", the torque applied by the motor to shaft 44 will be reversed, and collar 62 will move under the influence of spring 65 to allow engagement of plates 61 and 63 thus stopping or braking shaft 44 and hence drum 30.

On coupling the ball 21 to its cooperating cup hitch assembly on the vehicle to be towed, the switch is operated to cause the motor 51 to drive the drum 30 in a winding sense such that the cable is wound onto the winding surface 32 of drum 30. Initially the cable is located in the helical groove 33 to build the first layer of cable upon the drum surface. When the first layer is complete, the cable then rides up over the previous layer and wrapping of the cable occurs in the opposite sense to provide a second layer on drum 30. It will be appreciated by the man skilled in the art that the smaller the angle between each of flanges 31, 31′ and the pivot point 36, the more effective the winch will be in achieving an even wrap of cable about drum 30. The rocking pulley 40 about pivot 36 has the effect of shifting the effective pivot point of the cable from pulley 40 to a point substantially on the axis of axle 39 to the centre of rotation of pivot pin 36 in a direction away from the drum, thus reducing the angle defined by the flange 31, the pivot centre of pivot pin 36 and flange 31′.

Continued winding of the drum 30 will result in a subsequent third and even fourth cable layer on the winding drum to be accommodated in smooth wraps without risk of bunching and subsequent jamming. As the hitch 20 comes into juxtaposition with housing 10 the tapered form of body portion 19 is accommodated within the tapers defined by flanges 17 to guide the hitch portion 20 into nesting engagement with housing 10. Insertion of the locking members into drillings 22 serve to secure the portion 19 to housing 10 and relieves cable 41 of any substantial load during towing.

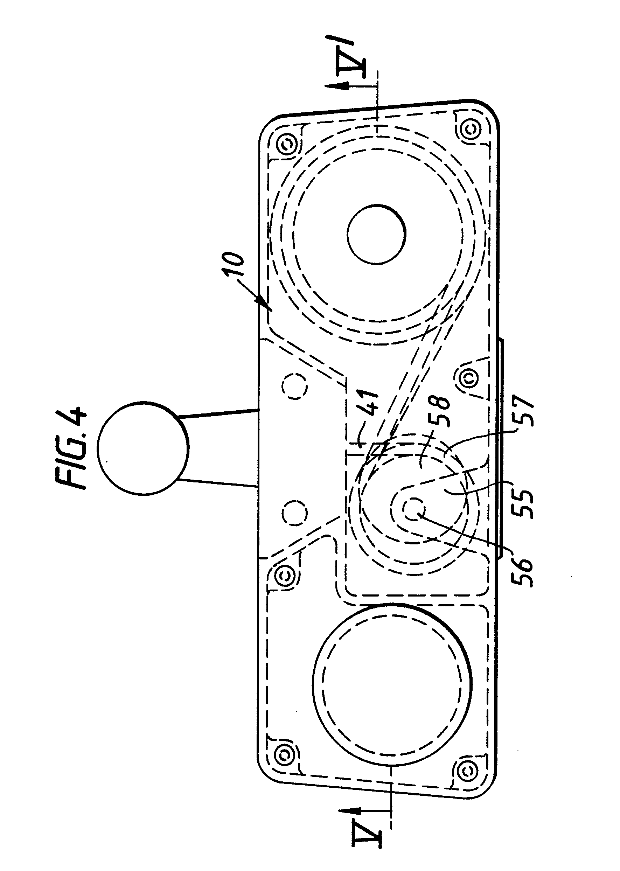

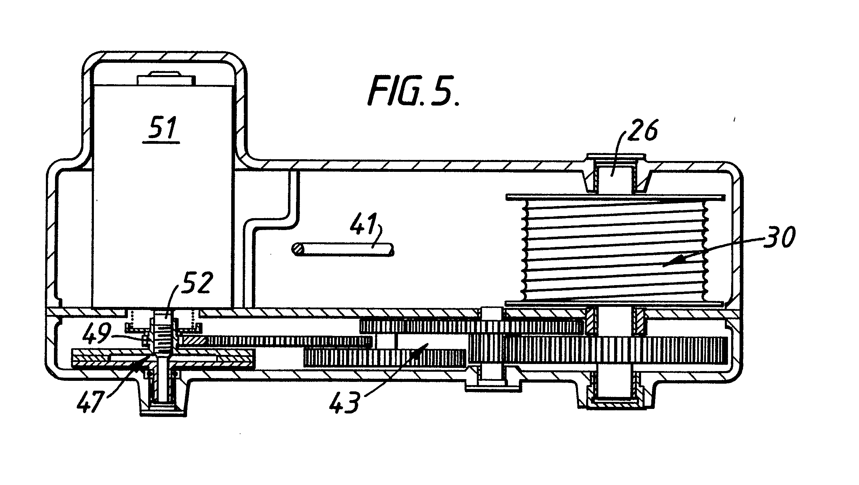

In the device illustrated in Figures 4 and 5 of the invention the motor unit 51 is in this case mounted with its output shaft 52 in substantially spaced parallel relationship with the winding axle 26. In this embodiment the overrun device 47 is located directly on the output shaft of the motor together with driven pinion 49 and no bevel gears are necessary since driven pinion 49 is a straight cut gear cooperating directly with gear train 43. In this particular embodiment, the diameter of the winding surface of the drum is much increased, thereby increasing the linear length of cable 41 accommodated on each revolution of the drum. In this way a 5 metre length of cable 41 can be accommodated in just two wraps on drum 30. The guide member is carried by means of a small trunnion 55 carrying an axial 56, the axis of rotation of which is skew in relation to the upper and lower surfaces 10 being angled to provide a single helical wrap 57 of cable 41 about the guide member 58 as the cable passes from guide member 58 to winding drum 30.

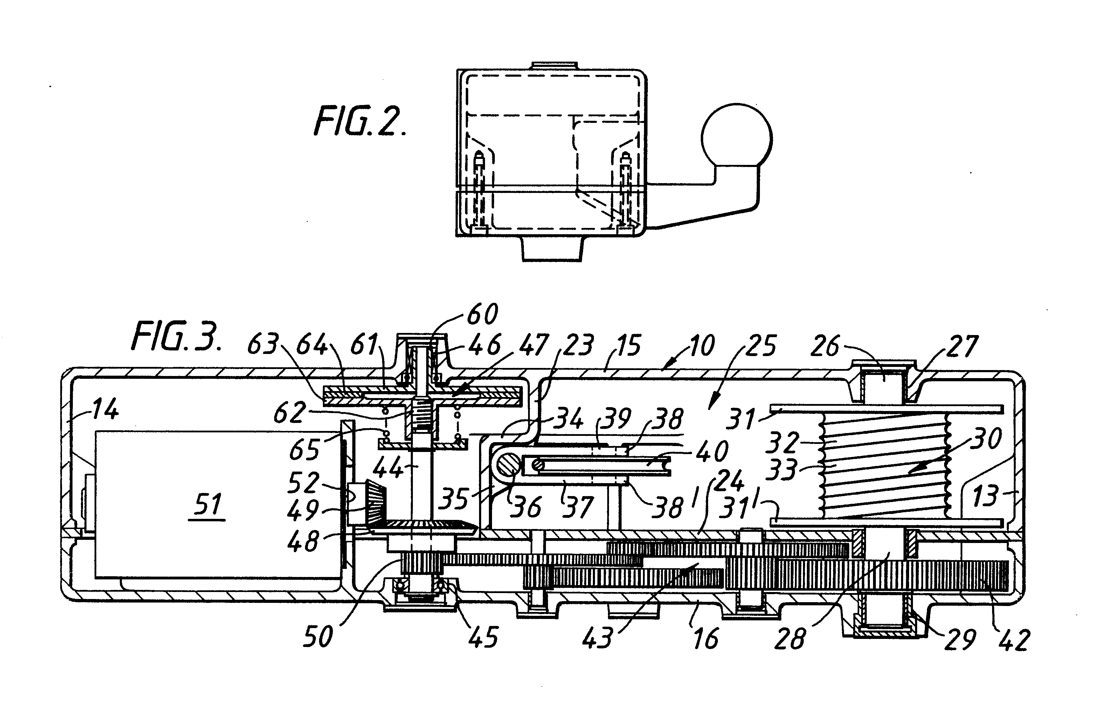

The operation of the device is substantially identical to that described with reference to Figures 1 to 3. Again by increasing the diameter of the winding surface to the maximum possible, the number of wraps (and hence layers) to be accommodated on the drum is reduced while at the same time, the off-set pivot on the side of the fore-aft line of the hitch assembly remote from the winding drum serves to increase as much as possible the angle defined by the two flanges 31, 31' of drum 30 and the take-off point of the cable 41 from the guide member 58 as it is fed to drum 30. By reducing this angle to a minimum within the space available within the housing satisfactory wrapping of the cable about the drum without substantial bunching can be effected.

The device as described above has been found to provide a facile method of hitching a trailer such as a caravan to a towing vehicle without the disadvantages inherent in prior art devices.

## Claims

1. A winch for a vehicle comprising a longitudinal winch cable, a drum rotatable about its axis for winding said cable and motor means for driving said drum in at least one sense, characterised in that the guide means is provided in spaced relationship to said drum for guiding said cable thereto, the drum being provided on its winding surface with a helical guide means for locating the cable thereon during winding, the geometry of the guide member, drum dimensions and relative spacing being such that during winding of the second and subsequent layers of cable upon the drum significant bunching of individual wraps thereon does not occur.

2. A winch as claimed in claim 1 characterised by a winding cable, a winch drum for receiving said cable, guide means for diverting the cable through a substantial angle to said winding drum, the arrangement being such that in a substantially no load condition the angle of deflection from the guide means to the extremities of the winding surface of the drum is such that the frictional forces acting between adjacent wraps of the cable retain their lay of the cable without substantial bunching.

3. A winch as claimed in either of the preceding claims characterised in that the guide means is fully rotatable about an axis serving to divert the winding direction of the cable transverse to the incidence of that cable to the pully during winding.

4. A winch as claimed in any preceding claim characterised in that the axis of the guide means may be skew with respect to the plane containing the cable to the guide means so that the cable is wrapped about said member to cover at least three quarters of its circumferential extent.

5. A winch as claimed in any preceding claim characterised in that the guide member may include means for providing minimum tension in the cable between the guide means and the drum in an otherwise no load situation.

6. A winch as claimed in any preceding claim characterised in that the guide member is mounted in a cage or support for rocking movement in response to the position of the lay of the cable on the winding surface of the drum.

7. A winch as claimed in any preceding claim characterised in that the guide means serves to divert the winding direction of the cable from a direction incident upon the guide means through an angle of between 75° and 310° for supply to said drum.

8. A winch as claimed in any preceding claim characterised in that the bitter end of the winding cable includes a coupling member further including a nesting portion which locates and nests in a mating proportion of the housing when the cable is in a fully retracted position.

9. A winch as claimed in claim 8 characterised in that means may be provided for securing the coupling member in its mating position, in its normal stode towing mode.

10. A winch as claimed in any preceding claim characterised in that the motor means for the drum is an electric motor driving the drum to effect both the winding and unwinding of the cable.

FIG.1.

0 271 205

FIG.2.

FIG.3.

0 271 205

FIG.4

0 271 205

FIG.5.

0 271 205